# EUROPÄISCHE PATENTSCHRIFT

(11) **EP 3 887 200 B1**
(45) Veröffentlichungstag und Bekanntmachung des Hinweises auf die Patenterteilung: **03.06.2026**
(21) Anmeldenummer: 19817596.0
(22) Anmeldetag: 19.11.2019
(51) Int. Cl.: B60N 2/00, B60N 2/24, B60N 2/42, B60N 2/427, B60N 2/50, B60N 2/52, B60N 2/54, F16F 9/53

(54) **VERFAHREN UND BAUGRUPPE ZUR ENERGIEABSORPTION ZUM SCHUTZ VOR SCHÄDEN BEI EINEM ÜBERLASTEREIGNIS**
METHOD AND ASSEMBLY FOR ENERGY ABSORPTION FOR PROTECTION AGAINST DAMAGE IN AN OVERLOAD EVENT
PROCÉDÉ ET ENSEMBLE DESTINÉS À L'ABSORPTION D'ÉNERGIE POUR LA PROTECTION CONTRE LES DOMMAGES LORS D'UN ÉVÉNEMENT DE SURCHARGE

(30) Priorität: 27.11.2018 DE 102018130002
(43) Veröffentlichungstag der Anmeldung: 06.10.2021
(73) Patentinhaber: General Dynamics European Land Systems - Mowag GmbH, 8280 Kreuzlingen (CH)
(72) Erfinder: LIST, Hans-Jörg, 88048 Friedrichshafen (DE)
(74) Vertreter: BSB Patentanwälte Schütte & Engelen Partnerschaft mbB
(86) Internationale Anmeldenummer: PCT/EP2019/081816
(87) Internationale Veröffentlichungsnummer: WO 2020/109088

(56) Entgegenhaltungen:
- WO-A1-2015/136105
- WO-A1-2015/136109
- GB-A- 2 289 332
- US-A1- 2017 002 890
- US-A1- 2017 051 867

## Beschreibung

Die vorliegende Erfindung betrifft ein Verfahren zum Absorbieren von Energie bei einem Überlastereignis mit einem Energieabsorber, um Belastungen auf ein auf einer Beladungseinheit transportiertes Objekt zu reduzieren. Dabei ist der Energieabsorber geeignet, wenigstens bei einem einmaligen Überlastereignis mit einem derart hohen Energieeintrag, bei dem ohne einen Energieabsorber ein Schaden an dem Objekt möglich oder überwiegend wahrscheinlich wäre, eine solche Energiemenge zu absorbieren, dass eine resultierende Belastung auf das Objekt bei dem Überlastereignis erheblich reduziert und ein dauerhafter Schaden vermieden wird. Ein solches einmaliges Überlastereignis tritt z. B. bei einer Explosion einer Mine auf.

Es sind unterschiedliche Verfahren zur Energieabsorption zur Reduktion von Belastungen bei Überlastfällen, wie zum Beispiel bei Explosionen unterhalb von gepanzerten Fahrzeugen, bekannt geworden, um die transportierten Objekte und insbesondere Personen und empfindliche Geräte zu schützen. Zum Schutz werden typischerweise mechanische Systeme eingesetzt, bei denen durch ein Umformen oder Aufreißen Energie absorbiert wird, um bei einem Überlastereignis Energie zu absorbieren und die Insassen entsprechend zu schützen. Zum Teil werden auch hydraulische Systeme eingesetzt.

Nachteilig daran ist allerdings, dass bei derartigen Systemen eine Steuerung der Dämpfung bzw. der Energieabsorption bei einem Überlastereignis mit unbekannter Impulsstärke und unbekanntem Impulsverlauf nicht möglich ist.

Aus der WO 2015/136111 A1 ist ein Verfahren und eine Baugruppe zur Energieabsorption von bei einem Überlastereignis einwirkenden Belastungen zum Schutz vor Schäden bekannt geworden, bei dem aus nach der Erkennung eines Überlastereignisses erfassten Messwerten ein Belastungsverlauf für die Beladungseinheit prognostiziert wird. Für den prognostizierten Belastungsverlauf wird ein Stromflussverlauf einer Magnetfeldeinheit eines Dämpfers geplant, der den prognostizierten Belastungsverlauf zeitabhängig so dämpft, dass ein geplanter Belastungsverlauf unterhalb einer vorgegebenen Lastgrenze verbleibt. Das bedeutet, dass während des Überlastereignisses eine Mehrzahl von Messwerten erfasst wird und daraus eine Prognose abgeleitet wird, die zur weiteren Steuerung eingesetzt wird. Die Qualität des Verfahrens hängt direkt von der Qualität der Messwerte und von der Qualität der Steuereinrichtung ab. Für eine hohe Qualität werden teure Sensoren und eine entsprechend teure Steuereinrichtung benötigt.

Mit der WO 2015/136105 A1 ist ein Verfahren und eine Baugruppe zur Energieabsorption von bei einem Überlastereignis einwirkenden Belastungen zum Schutz vor Schäden bekannt geworden, bei dem nach der Erkennung eines Überlastereignisses der Energieabsorber sofort auf den maximalen Dämpfungswert eingestellt wird, um die Dämpfung für eine vorgegebene Zeitspanne nach Eintritt des Ereignisses möglichst hoch einzustellen. Während der vorgegebenen Zeitspanne wird eine Mehrzahl aufeinanderfolgender Messwerte erfasst und nach der vorgegebenen Zeitspanne wird die Dämpfung in Abhängigkeit von den Messwerten während der vorgegebenen Zeitspanne gesteuert. Das bedeutet, dass während des Überlastereignisses eine Mehrzahl von Messwerten erfasst wird und daraus eine Prognose abgeleitet wird, die zur weiteren Steuerung eingesetzt wird. Die Qualität des Verfahrens hängt direkt von der Qualität der Messwerte und von der Qualität der Steuereinrichtung ab. Für eine hohe Qualität werden teure Sensoren und eine entsprechend teure Steuereinrichtung benötigt.

Es ist deshalb die Aufgabe der vorliegenden Erfindung, ein Verfahren und eine Baugruppe zum Dämpfen zur Verfügung zu stellen, womit eine gute Steuerung der Dämpfung bei Überlastereignissen möglich ist und welches Verfahren und welche Baugruppe mit geringerem Aufwand implementiert werden können. Diese Aufgabe wird durch ein Verfahren mit den Merkmalen des Anspruchs 1 und durch eine Baugruppe mit den Merkmalen des Anspruchs 11 gelöst. Bevorzugte Weiterbildungen der Erfindung sind in den Unteransprüchen angegeben. Weitere Vorteile und Merkmale ergeben sich aus der allgemeinen Beschreibung und der Beschreibung der Ausführungsbeispiele.

Ein erfindungsgemäßes Verfahren dient zum Absorbieren von Energie bei einem Überlastereignis und wird insbesondere mit einem Energieabsorber durchgeführt. Durch die Energieabsorption werden wenigstens bei einem Überlastereignis Belastungen auf ein auf einer Beladungseinheit transportiertes Objekt reduziert. Der Energieabsorber ist dabei insbesondere geeignet, bei einem einmaligen Überlastereignis mit einem derart hohen Energieeintrag, bei dem ohne einen Energieabsorber ein Schaden an dem Objekt möglich, wahrscheinlich, überwiegend wahrscheinlich oder sogar nahezu sicher oder sicher wäre, Energie zu absorbieren, um durch die Energieabsorption des Energieabsorbers bei dem Überlastereignis eine resultierende Belastung auf (die Beladungseinheit bzw.) ein bzw. das Objekt zu reduzieren und um insbesondere einen Schaden an dem Objekt zu vermeiden. Dabei werden mit einer Sensoreinrichtung periodisch Messwerte über den aktuellen Zustand der Beladungseinheit erfasst. Eine Steuereinrichtung erkennt aus den erfassten Messwerten ein Überlastereignis. Es wird ein Maß für ein Gewicht des zu transportierenden bzw. des transportierten Objekts ermittelt. Aus dem Maß für das Gewicht wird ein Grenzwert für eine Belastung des zu transportierenden Objektes ermittelt. Nach der Erkennung des Überlastereignisses wird eine Dämpfung des Energieabsorbers so gesteuert, dass die Belastung bzw. ein Belastungswert des zu transportierenden Objektes unterhalb des Grenzwertes verbleibt. Dazu wird nach der Erkennung des Überlastereignisses periodisch die Dämpfung des Energieabsorbers mit den periodisch erfassten Messwerten eingestellt und die Dämpfung des Energieabsorbers insbesondere anhand der periodisch erfassten Messwerte angepasst, wobei die Überlastereignisgrenze in Abhängigkeit von dem Grenzwert festgelegt wird.

Das erfindungsgemäße Verfahren hat viele Vorteile. Ein erheblicher Vorteil besteht darin, dass nach der Erkennung eines Überlastereignisses die Dämpfung direkt in Abhängigkeit von den jeweils aktuellen Messwerten eingestellt wird. Besonders vorteilhaft ist, dass die Dämpfung in Abhängigkeit von dem Gewicht des zu transportierenden Objektes eingestellt wird.

Vorzugsweise wird eine Dämpfung des Energieabsorbers nicht nur periodisch eingestellt, sondern es wird die Dämpfung des Energieabsorbers geregelt. Die Steuereinrichtung kann dann als Regelungseinrichtung bezeichnet werden oder umfasst wenigstens eine solche. Ein System, bei dem in periodischen Abständen ein Kennwert ermittelt wird und eine Dämpfung in Abhängigkeit von dem ermittelten Kennwert periodisch eingestellt wird, kann auch als Regelung verstanden werden. Möglich ist es auch, dass eine aktive Regelung durchgeführt wird.

Unter einem Schaden an einem Objekt im Sinne der vorliegenden Anmeldung wird ein Zustand verstanden, in welchem das Objekt wenigstens vorübergehend in einer als nachteilig bewerteten, nicht wünschenswerten Weise verändert wird oder ist. Das kann ein vorübergehender Schaden sein sein. Möglich ist auch ein bleibender oder sogar irreparabler Schaden.

Bei Personen als Objekten ist ein Schaden eine gesundheitliche Beeinträchtigung. Ein bleibender Schaden bedeutet bei Personen wenigstens eine längerfristige und deutliche Beeinträchtigung des Wohlbefindens. Ein Schaden an einem Gegenstand oder einem Gerät kann vorübergehend sein, ist aber insbesondere länger andauernd und kann auch ein bleibender Defekt sein, wie ein Bruch eines Bauteils.

Durch das Verfahren wird das Verletzungsrisiko einer transportierten Person als zu transportierendem Objekt deutlich reduziert. Da bei der Einstellung der Dämpfung das Gewicht einer zu transportierenden Person berücksichtigt wird, wird die Dämpfung individuell auf die zu transportierende Person und deren Gewicht eingestellt. Dadurch wird zuverlässig verhindert, dass eine kleine Person einer zu großen Belastung ausgesetzt wird, da die Wirbelsäule von kleineren und leichteren Personen eine z. B. kleinere Querschnittsfläche aufweist und damit aufgrund ihrer Festigkeit nicht derart hohen Belastungen ausgesetzt werden kann wie die Wirbelsäule von großen und schwereren Personen, die typischerweise einen größeren Querschnitt der Wirbelsäule und damit auch eine höhere Festigkeit aufweisen.

Typischerweise wird das Verfahren und die Baugruppe an gepanzerten Fahrzeugen oder beispielsweise Schnellbooten oder dergleichen eingesetzt, wo Soldaten oder Polizisten eingesetzt werden, die an sich körperlich fit sind. Dadurch kann anhand des Gewichts im gewissen Maße auf die Statur der transportierten Person zurückgeschlossen werden. Individuelle Anpassungen des Grenzwertes sind aber möglich und bevorzugt.

Mit dem erfindungsgemäßen Verfahren kann eine zuverlässige

Einstellung und Steuerung der Dämpfung bei Überlastereignissen erzielt werden, wobei eine aufwendige Steuerungseinrichtung mit einer komplexen Prognoseeinrichtung nicht nötig ist. Das reduziert den Aufwand für den Einsatz eines erfindungsgemäßen Verfahrens oder einer erfindungsgemäßen Baugruppe und die anfallenden Kosten.

Bei dem erfindungsgemäßen Verfahren kann der mögliche Verfahrweg bei besonders schweren Überlastereignissen optimal genutzt werden, da für jede zu transportierende Person oder für jedes zu transportierende Objekt individuell eine geeignete Dämpfung eingestellt werden kann. Dadurch kann bei jeder einzelnen Person ein optimaler Schutz erreicht werden. Die Dämpfung kann insbesondere auf einen derart hohen Wert eingestellt werden, bei dem der individuelle Grenzwert der zu transportierenden Person aber möglichst nicht überschritten wird.

Wird die Sensoreinrichtung an dem Sitz einer zu transportierenden Person montiert, so wirkt auf die Sensoreinrichtung die Gewichtskraft der transportierten Person ein. Im Falle einer Explosion einer Mine wird zunächst das Polster oder Sitzkissen komprimiert, auf dem ein Benutzer sitzt, bevor die Wirbelsäule der transportierten Person komprimiert wird. Dadurch verzögert sich die Belastung auf die Sensoreinrichtung an der Sitzeinrichtung. Das bedeutet, dass bei der periodischen Einstellung der Dämpfung anhand der periodisch aufgenommenen Messwerte das Polster und auch die körperlichen Eigenheiten der transportierten Person implizit berücksichtigt werden. Es erfolgt jederzeit eine optimale Dämpfung, ohne aus erfassten Messwerten eine Prognose ermitteln zu müssen.

In einer bevorzugten Weiterbildung leitet die Steuereinrichtung aus den Messwerten periodisch charakteristische Kennwerte für eine Belastung bzw. einen Belastungswert der Beladungseinheit ab. Dazu können die Messwerte beispielsweise mit geeigneten Faktoren in gängige Einheiten umgerechnet werden oder es können dimensionslose charakteristische Kennwerte bestimmt werden, die sich zur Weiterverarbeitung eignen.

Vorzugsweise ist an der Beladungseinrichtung eine Schereinrichtung oder wenigstens eine Schereinrichtung vorgesehen. Die Schereinrichtung wird abgeschert, wenn die auf die Beladungseinheit einwirkende Belastung eine Überlastereignisgrenze überschreitet. Die Steuereinrichtung erkennt ein Überlastereignis, wenn ein Abscheren der Schereinrichtung detektiert wird. Eine solche Schereinrichtung hat den Vorteil, dass der von dem Energieabsorber zur Verfügung gestellte Hub vollständig erhalten bleibt, bis ein Überlastereignis auftritt. Dadurch steht beim Überlastereignis der vollständige Hub zur Verfügung, sodass auch sehr große Belastungen gedämpft und deren Energie absorbiert werden können. Eine solche Ausgestaltung ist sehr einfach umzusetzen, da dass Abscheren einer Schereinrichtung wie beispielsweise eines Scherbolzens als Startpunkt für das Verfahren dienen kann. Beispielsweise werden mit der Sensoreinrichtung Messwerte erst periodisch aufgenommen, wenn der Schersensor ein Abscheren der Schereinrichtung detektiert hat. Das kann beispielsweise so erfolgen, dass ein Scherbolzen eine durchgehende elektrisch leitende Verbindung zur Verfügung stellt, deren Unterbrechung das Startsignal zur periodischen Erfassung von Messwerten initiiert. Möglich ist auch ein kapazitiver oder induktiver Sensor. Vorzugsweise ist eine Schereinrichtung wie ein Scherbolzen auf die leichteste zu transportierende Person abgestimmt. Das kann aber dazu führen, dass eine schwerere Person den Scherbolzen bereits vor dem Überlastereignis zerstört. Deshalb ist eine kontinuierliche bzw. periodische Überwachung der Sensordaten vorteilhaft.Es ist bevorzugt, dass die Steuereinrichtung ein Überlastereignis erkennt, wenn ein charakteristischer Kennwert eine Überlastereignisgrenze überschreitet. In einfachen Ausgestaltungen wird ein Überlastereignis erkannt, wenn ein Messwert eine entsprechende Grenze überschreitet. Eine solche Ausgestaltung funktioniert sowohl mit einer Schereinrichtung als auch ohne den Einsatz einer Schereinrichtung. Es ist möglich, dass die Steuereinrichtung ständig Messwerte der Sensoreinrichtung erfasst und das Überlastereignis anhand der Größe der abgeleiteten charakteristischen Kennwerte (oder direkt der Messwerte) bestimmt. Überschreitet die gemessene oder die ermittelte Beschleunigung der Sitzeinrichtung eine gewisse Höhe oder überschreitet die aufgebrachte Kraft eine gewisse Höhe, wird ein Überlastereignis erkannt.

Die Überlastereignisgrenze wird in Abhängigkeit von dem (definierten oder individuell festgelegten) Grenzwert festgelegt. Beispielsweise kann die Überlastereignisgrenze auf zum Beispiel 50 % oder 60 % oder 75 % des Grenzwertes eingestellt werden. Eine solche individuelle Überlastereignisgrenze bietet den Vorteil, dass beispielsweise bei einem Truppentransporter, der eine Anzahl von Personen transportiert, in individueller Abhängigkeit von der jeweiligen Person die Überlastereignisgrenze eingestellt und dementsprechend auch überschritten und individuell detektiert wird. Dadurch wird die Belastungsfähigkeit von einzelnen Personen optimal berücksichtigt. Auch bei dem Transport von Geräten oder anderen Einrichtungen kann eine spezielle individuelle Überlastereignisgrenze eingestellt werden, je nachdem, wie empfindlich das entsprechende Gerät oder die Einrichtung ist. Das gilt zum Beispiel insbesondere auch für den Transport von Objekten wie z. B. Munition oder Sprengstoffen oder von deren Bestandteilen.

In bevorzugten Weiterbildungen wird aus der Belastung der Beladungseinheit im Ruhezustand (Belastungswert im Ruhezustand) das Maß für ein Gewicht des zu transportierenden Objektes ermittelt. Insbesondere findet eine solche Ermittlung ohne Bewegung des Fahrzeugs oder des Transportmittels statt. Beispielsweise bevor das Fahrzeug gestartet wird oder sich in Bewegung setzt.

In bevorzugten Weiterbildungen wird aus einem zeitlichen Mittelwert der Belastung (mittlerer Belastungswert) der Beladungseinheit das Maß für ein Gewicht des zu transportierenden Objektes ermittelt. Beispielsweise kann vor dem Start des Transportmittels für einen gewissen Zeitraum die Belastung gemessen und daraus ein zeitlicher Mittelwert abgeleitet werden. Möglich ist es aber auch, dass bei oder nach dem Start oder im laufenden Betrieb ein zeitlicher Mittelwert der Belastung der Beladungseinheit ermittelt wird. Dabei kann beispielsweise für 1 Sekunde oder für 5 Sekunden oder 10 Sekunden oder auch für einen kürzeren oder längeren Zeitraum ein zeitliches Mittel der Belastung abgeleitet werden und zur Ermittlung der individuellen Überlastereignisgrenze verwendet werden.

Insbesondere wird die Ermittlung der Belastung der Beladungseinheit direkt nach der Aktivierung durchgeführt. Unter der Aktivierung ist insbesondere ein Start eines Transportmittels oder auch die Aktivierung der Baugruppe zu verstehen.

In allen Ausgestaltungen ist es bevorzugt, dass eine Ermittlung eines Typs des zu transportierenden Objektes durchgeführt wird. Bei Personen als zu transportierenden Objekten kann insbesondere das Geschlecht ermittelt werden. Möglich ist auch eine Ermittlung des Alters oder einer Altersgruppe oder die Ermittlung anderer Eigenschaften. Vorzugsweise wird eine Identifikationseinheit des zu transportierenden Objektes erkannt. Vorzugsweise wird ein Speicher der Identifikationseinheit des zu transportierenden Objektes drahtgebunden oder drahtlos ausgelesen. Beispielsweise können die Daten aus dem Speicher der Identifikationseinheit über RFID (englisch: radio-frequency identification), Bluetooth, WLAN oder andere drahtgebundene oder drahtlose Verfahren ausgelesen werden. In dem Speicher können Angaben über das Geschlecht, die Größe, das Gewicht und insbesondere auch ein persönlicher Grenzwert für das Objekt oder die zu transportierende Person enthalten sein.

In allen Ausgestaltungen ist es bevorzugt, dass ein individueller Faktor zur Ermittlung des Grenzwertes oder direkt ein Grenzwert eingebaut ist. Damit kann entsprechend eine Steuerung durchgeführt werden. Beispielsweise kann der Grenzwert über einen Faktor individuell vergrößert oder verringert werden, indem der Benutzer beispielsweise 80 % oder 120 % eingibt. Auch die direkte Eingabe eines Grenzwertes ist möglich.

In allen Ausgestaltungen ist es bevorzugt, dass mit dem Verfahren auch eine Komfortdämpfung durchgeführt werden kann. Insbesondere ist es bevorzugt, einen insbesondere vorbestimmten oder wählbaren Anteil eines Hubes des Energieabsorbers für die Komfortdämpfung einzustellen. Beispielsweise kann bei einem Gesamthub von 160 mm oder von 180 mm ein Anteil von 30 mm, 40 mm, 50 mm, 60 mm oder 70 mm für die Komfortfunktion zur Verfügung gestellt werden. Beispielsweise kann für die Komfortfunktion ein Anteil von wenigstens 10% des Gesamthubes vorgesehen sein. Vorzugsweise wird ein Anteil von wenigstens 15 % oder 20% für die Komfortfunktion bereitgestellt. Bevorzugt ist insbesondere ein Anteil des Gesamthubes zwischen 10% und 50% und vorzugsweise zwischen 20% und 35% des Gesamthubes.

Dann kann bei der Fahrt mit beispielsweise einem gepanzerten Fahrzeug im Gelände eine Dämpfung von kleineren (und auch größeren) Schlägen und Stößen durchgeführt werden, während gleichzeitig noch ein genügender Hub zur Verfügung steht, damit bei einem unvorhergesehenen Überlastereignis wie einer Minenexplosion noch ausreichend Hub zur Verfügung steht, um eine transportierte Person zuverlässig zu schützen. Der Anteil eines Hubes des Energieabsorbers für eine Komfortfunktion ist insbesondere einstellbar.

Möglich und bevorzugt ist es auch, dass eine Dämpfung im Komfortbereich erhöht wird, wenn sich der aktuelle Hub dem Ende des Komfortbereiches nähert.

Bei Einsatz einer Schereinrichtung ist es möglich und bevorzugt, dass eine Schereinheit wie ein Scherbolzen erst am Ende des Komforthubes abgeschert wird. Das Abscheren oder Durchtrennen einer Schereinheit kann in solchen Fällen auch als Trigger zur Erkennung eines Überlastereignisses verwendet werden.

In bevorzugten Ausgestaltungen ist eine Überlastereignisgrenze und/oder eine Maximalbelastung des zu transportierenden Objekts veränderbar. Dabei kann die Überlastereignisgrenze und/oder die Maximalbelastung proportional prozentual oder auch stufenweise vergrößerbar oder verkleinerbar sein. Dadurch wird eine noch bessere individuelle Anpassung erreicht.

Vorzugsweise ist eine Voreinstellung für eine Maximalbelastung in der Identifikationseinheit gespeichert.

Besonders bevorzugt ist die Maximalbelastung abhängig von einem Geschlecht und/oder einem Alter einer zu transportierenden Person. Möglich ist es auch, dass die Maximalbelastung von dem Fitnesszustand oder einem anderen vorgegebenen oder einzustellenden Parameter eines zu transportierenden Objektes abhängt.

In bevorzugten Weiterbildungen verfügt der Energieabsorber über ein Absorberventil, dessen Dämpfung über eine Stärke eines angelegten Magnetfeldes gesteuert wird. Insbesondere wird in dem Energieabsorber ein magnetorheologisches Fluid verwendet, welches über eine Stärke eines angelegten Magnetfeldes gezielt beeinflusst wird.

In allen Ausgestaltungen ist es möglich und bevorzugt, dass eine Mehrzahl an Energieabsorbern vorhanden ist. Unter dem Begriff "ein Energieabsorber" ist deshalb wenigstens ein Energieabsorber zu verstehen. Ein Energieabsorber kann auch zwei oder mehr Energieabsorbereinheiten umfassen. Jede Energieabsorbereinheit kann vorzugsweise identisch aufgebaut sein. Wenigstens eine Energieabsorbereinheit kann aufgebaut sein, wie ein zuvor beschriebener Energieabsorber. Zwei oder mehr Energieabsorbereinheiten können benachbart zueinander oder auch entfernt voneinander angeordnet sein. Beispielsweise kann an oder in der Nähe der seitlichen Enden der Beladungseinheit jeweils eine Energieabsorbereinheit bzw. jeweils ein Energieabsorber angeordnet sein. Zwei oder mehr oder vorzugsweise alle Energieabsorber (-einheiten) werden vorzugsweise gemeinsam gesteuert. Eine Ansteuerung findet insbesondere (wenigstens im Wesentlichen) gleichzeitig oder doch insbesondere wenigstens zeitlich überlappend statt.

Eine erfindungsgemäße Baugruppe mit einer Beladungseinheit zum Transport von Objekten umfasst einen Energieabsorber bzw. wenigstens einen Energieabsorber zum Absorbieren von Energie wenigstens bei einem Überlastereignis, um Belastungen auf ein auf einer Beladungseinheit transportiertes Objekt zu reduzieren. Der Energieabsorber ist dazu eingerichtet und geeignet, bei einem einmaligen Überlastereignis mit einem derart hohen Energieeintrag, bei dem ohne Energieabsorber ein Schaden an dem Objekt möglich oder überwiegend wahrscheinlich wäre, Energie zu absorbieren, um durch die Energieabsorption des Energieabsorbers bei dem Überlastereignis resultierende Belastung (resultierender Belastungswert) auf das Objekt zu reduzieren. Eine Steuereinrichtung und wenigstens eine Sensoreinrichtung sind zur Erfassung von Messwerten über den aktuellen Zustand der Beladungseinheit und wenigstens der Energieabsorber vorgesehen, wobei der Energieabsorber mit den Messwerten durch die Steuereinrichtung steuerbar ist. Die Steuereinrichtung ist dazu eingerichtet und ausgebildet, aus den erfassten Messwerten ein Überlastereignis zu erkennen. Dabei ist die Steuereinrichtung dazu eingerichtet und ausgebildet, ein Maß für ein Gewicht des zu transportierenden Objekts zu ermitteln und aus dem Maß für das Gewicht einen Grenzwert für eine Belastung des zu transportierenden Objektes zu ermitteln. Die Steuereinrichtung ist dazu eingerichtet und ausgebildet, nach der Erkennung des Überlastereignisses eine Dämpfung des Energieabsorbers so zu steuern, dass die Belastung (insbesondere ein Belastungswert) des zu transportierenden Objekts unterhalb des Grenzwertes verbleibt. Die Steuereinrichtung ist dazu eingerichtet und ausgebildet, wenigstens nach der Erkennung des Überlastereignisses, mit den periodisch erfassten Messwerten periodisch eine Anpassung der Dämpfung des Energieabsorbers einzustellen bzw. die Dämpfung anzupassen und die Überlastereignisgrenze in Abhängigkeit von dem Grenzwert festzulegen.

Auch die erfindungsgemäße Baugruppe hat viele Vorteile. Die erfindungsgemäße Baugruppe ermöglicht eine einfache und zuverlässige Steuerung der Dämpfung im Falle eines Überlastereignisses, wobei ein transportiertes Objekt wie insbesondere eine transportierte Person oder ein zu transportierender Gegenstand zuverlässig und optimal geschützt werden.

Die erfindungsgemäße Baugruppe umfasst vorzugsweise eine Sensoreinrichtung, die an der Baugruppe befestigt ist. Die Sensoreinrichtung kann drahtgebunden oder drahtlos oder in Kombination drahtgebunden und drahtlos gekoppelt sein. Eine redundante Ankopplung ist möglich.

Vorzugsweise ist die Sensoreinrichtung an einem gedämpften Teil der Baugruppe befestigt. Beispielsweise ist es bevorzugt, dass die Sensoreinrichtung an der Sitzeinrichtung beispielsweise eines Minenschutzsitzes befestigt ist. Insbesondere wird mit der Sensoreinrichtung unmittelbar oder mittelbar ein Maß für ein Gewicht bzw. eine Gewichtskraft einer darauf sitzenden Personen ermittelt.

Vorzugsweise umfasst die Sensoreinrichtung wenigstens einen Sensor wie eine Wiegezelle und/oder wenigstens einen Dehnungsmessstreifen und/oder eine Kraftmessdose und/oder andere Sensortypen und Sensoren zur Erfassung einer Kraft. Mit derartigen Sensoren können Werte für eine Gewichtskraft oder eine Belastung einer zu transportierenden Person oder eines zu transportierenden Gegenstands ermittelt oder aus den Messwerten über einfachere oder komplexere Umrechnungen, Integration und/oder Differentiation abgeleitet werden.

In bevorzugten Weiterbildungen verfügt der Energieabsorber über wenigstens ein Absorberventil, dessen Dämpfung über eine Stärke eines angelegten Magnetfeldes gesteuert wird.

Vorzugsweise ist an der Beladungseinheit eine Schereinrichtung vorgesehen, die abscherbar ist, wenn die auf die Beladungseinheit einwirkende Belastung ein vorbestimmtes Maß überschreitet.

In allen Ausgestaltungen ist es bevorzugt, dass die Baugruppe eine Beladungseinheit umfasst, die als Sitzeinrichtung an einem Transportmittel wie einem Fahrzeug oder zum Beispiel einem Boot ausgebildet ist. Dabei umfasst die Sitzeinrichtung eine als Sitz ausgebildete Aufnahmeeinheit und eine als Sitzrahmen ausgebildete Trägereinrichtung. Der Energieabsorber ist (wenigstens funktionell) zwischen dem Sitz und dem Sitzrahmen angebracht.

Ein weiteres oder anderes Verfahren dient zum Absorbieren von Energie bei einem Überlastereignis mit einem Energieabsorber, um Belastungen auf ein auf einer Beladungseinheit transportiertes Objekt zu reduzieren. Der Energieabsorber ist geeignet, wenigstens bei einem einmaligen Überlastereignis mit einem derart hohen Energieeintrag, bei dem ohne Energieabsorber ein Schaden an dem Objekt möglich oder überwiegend wahrscheinlich wäre, Energie zu absorbieren. Durch die Energieabsorption des Energieabsorbers wird bei dem Überlastereignis eine resultierende Belastung (resultierender Belastungswert) auf das Objekt reduziert. Mit einer Sensoreinrichtung werden insbesondere periodisch Messwerte über den aktuellen Zustand der Beladungseinheit erfasst. Eine Steuereinrichtung erkennt aus den erfassten Messwerten ein Überlastereignis. Es wird ein Maß für eine Belastung (Belastungswert) des zu transportierenden Objektes (periodisch) ermittelt. Nach der Erkennung des Überlastereignisses wird eine Dämpfung des Energieabsorbers so gesteuert, dass die Belastung (der Belastungswert) des zu transportierenden Objektes unterhalb des Grenzwertes verbleibt. Die Anmelderin behält sich vor, für dieses Verfahren separtaen Schutz zu beantragen.

Eine weitere oder andere Baugruppe umfasst eine Beladungseinheit zum Transport von Objekten und einen Energieabsorber zum Absorbieren von Energie wenigstens bei einem Überlastereignis, um Belastungen auf ein auf einer Beladungseinheit transportiertes Objekt zu reduzieren. Dabei ist der Energieabsorber geeignet und eingerichtet, bei einem einmaligen Überlastereignis mit einem derart hohen Energieeintrag, bei dem ohne Energieabsorber ein Schaden an dem Objekt möglich oder überwiegend wahrscheinlich wäre, Energie zu absorbieren, um durch die Energieabsorption des Energieabsorbers bei dem Überlastereignis eine resultierende Belastung (resultierender Belastungswert) auf das Objekt zu reduzieren. Eine Steuereinrichtung und wenigstens eine Sensoreinrichtung sind zur Erfassung von Messwerten über den aktuellen Zustand der Beladungseinheit und wenigstens des Energieabsorbers vorgesehen, wobei der Energieabsorber mit den Messwerten durch die Steuereinrichtung steuerbar ist. Die Steuereinrichtung ist dazu eingerichtet und ausgebildet, aus den erfassten Messwerten ein Überlastereignis zu erkennen. Die Steuereinrichtung ist dazu eingerichtet und ausgebildet, ein Maß für eine Belastung des zu transportierenden Objektes zu ermitteln. Die Steuereinrichtung ist dazu eingerichtet und ausgebildet, nach der Erkennung des Überlastereignisses eine Dämpfung des Energieabsorbers so zu steuern, dass die Belastung (Belastungswert) des zu transportierenden Objektes unterhalb des Grenzwertes verbleibt. Die Anmelderin behält sich auch vor, für diese Baugruppe separaten Schutz zu beantragen.

Dieses zuletzt beschriebene Verfahren und diese zuletzt beschriebene Vorrichtung haben viele Vorteile. Das Verfahren ist einfach durchzuführen und bietet erheblichen Schutz. In Weiterbildungen dieses Verfahrens und dieser Vorrichtung können zusätzlich auch einzelne, einige oder alle Merkmale der zuvor beschriebenen Ausgestaltungen realisiert werden.

Weitere Vorteile und Merkmale und Eigenschaften der vorliegenden Erfindung ergeben sich aus der Beschreibung der Ausführungsbeispiele, die mit Bezug auf die beiliegenden Figuren im Folgenden erläutert werden.

In den Figuren zeigen:
- Figur 1: eine schematische perspektivische Ansicht einer erfindungsgemäßen Baugruppe;
- Figur 2: eine Vorderansicht der Baugruppe nach Figur 1;
- Figur 3: eine Seitenansicht im Schnitt der Baugruppe nach Figur 1 im Dämpfungszustand;
- Figur 4: ein Fahrzeug mit erfindungsgemäßen Baugruppen zum Schutz der Insassen bei Explosionen in einem stark schematischen Querschnitt;
- Figur 5: ein Fahrzeug mit erfindungsgemäßen Baugruppen zum Schutz der Insassen bei Explosionen in einem stark schematischen Längsschnitt;
- Figur 6: den zeitlichen Verlauf einer Belastung bei einer Minenexplosion, wobei ein ungedämpfter Verlauf, ein Verlauf ohne Komfortfunktion und ein Verlauf mit Komfortfunktion dargestellt sind.

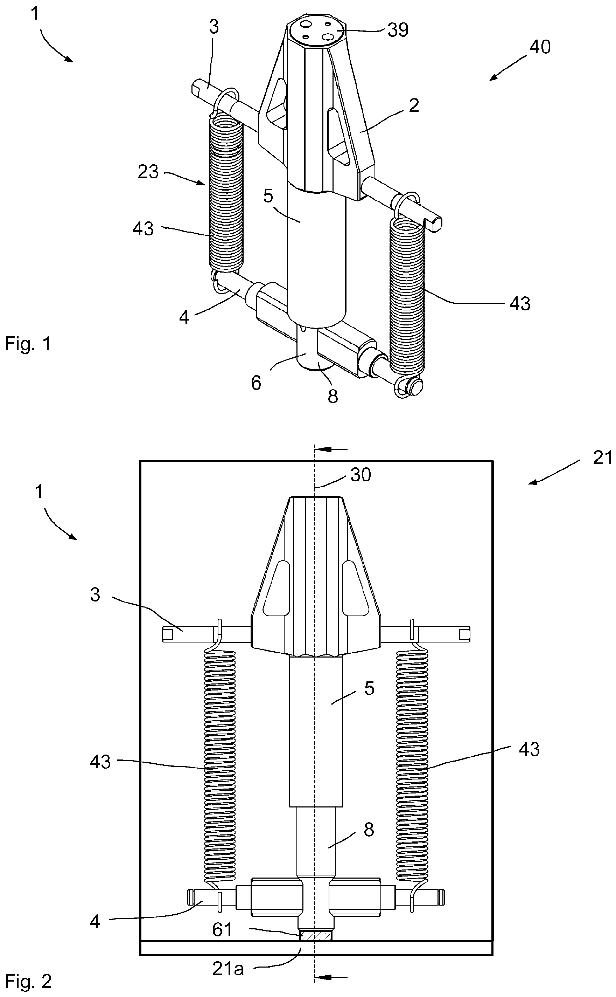

In Fig. 1 ist eine schematische perspektivische Ansicht einer erfindungsgemäßen Baugruppe 1 dargestellt. Die Baugruppe umfasst einen Absorberzylinder 5, an dessen einem Ende eine Befestigungseinrichtung 3 und an dessen anderem Ende eine Halteeinrichtung 4 vorgesehen sind. Die Halteeinrichtung 4 und die Befestigungseinrichtung 3 weisen hier jeweils zwei seitlich abstehende Arme auf, an denen jeweils eine Vorspannfeder 43 einer Vorspanneinrichtung oder Rückstelleinrichtung 23 angeordnet ist, um die Baugruppe 1 nach einem Überlastereignis 65 wieder in den Ruhezustand 40 zu überführen, der auch in Figur 1 dargestellt ist. In anderen Ausgestaltungen kann die Baugruppe 1 auch nur einen oder gar keinen seitlich abstehenden Arm aufweisen.

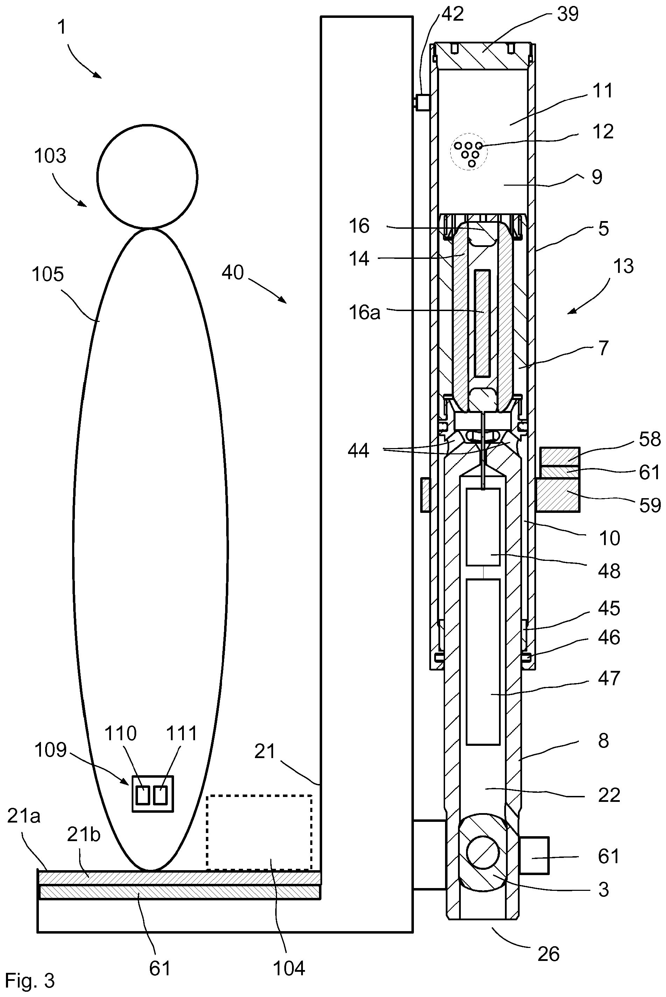

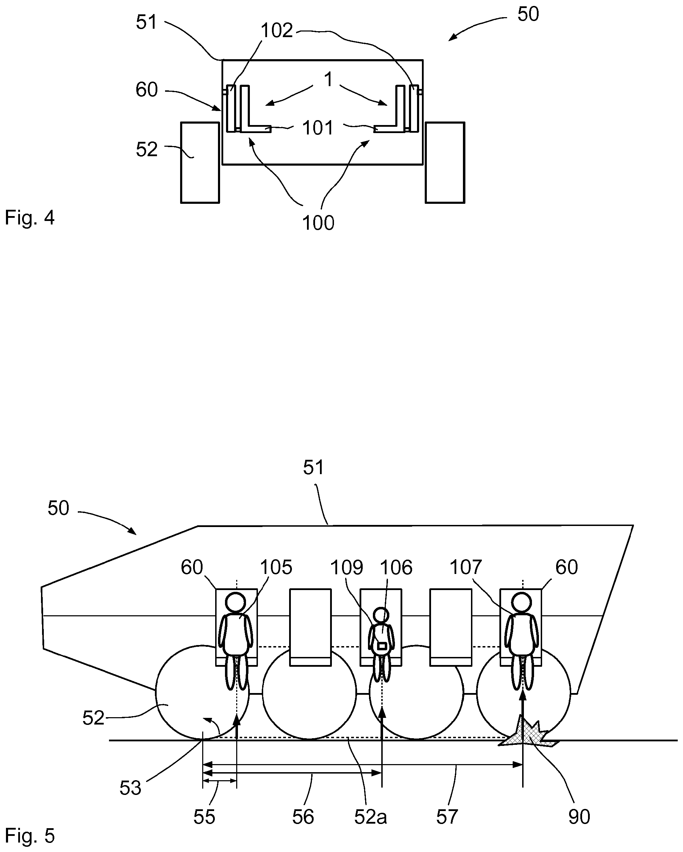

Die Baugruppe 1 dient zur Energieabsorption bzw. zur Dämpfung von Relativbewegungen zwischen der Befestigungseinrichtung 3 und der Halteeinrichtung 4. Die Halteeinrichtung 4 ist dazu mit der Kolbeneinrichtung 6 des Energieabsorbers 2 verbunden, während die Befestigungseinrichtung 3 fest mit dem Absorberzylinder 5 verbunden ist. Am oberen Ende ist hier ein Abschlussdeckel 39 zu sehen, der die hier im Inneren verborgene zweite Kammer der Absorberkammer 9 nach außen hin abschließt und begrenzt. Die Baugruppe 1 wird insbesondere an einer Beladungseinheit 100 zwischen einer Aufnahmeeinheit 101 und einer Trägereinrichtung 102 eingesetzt (vgl. Fig. 3 oder 4).

Figur 2 zeigt die Baugruppe 1 in einer Vorderansicht. Durch den Absorberzylinder 5 erstreckt sich zentral eine Symmetrieachse 30, durch welche der Schnitt nach Figur 3 verläuft. In Fig. 2 ist schematisch die Sitzeinrichtung 21 und die Sitzfläche 21a dargestellt, auf der eine Person 105 Platz nehmen kann. Auch Gegenstände 104, Tiere oder andere Objekte 103 können transportiert und beim Transport vor z. B. Minenexplosionen geschützt werden.

Möglich ist es auch, dass die Sitzeinrichtung 21 auf einem Schnellboot befestigt ist und Stöße durch z. B. Wellen dämpft. Bei Schnellbooten kann es vorkommen, dass z. B. einmal pro Minute eine sehr viel stärkere Welle auftritt und dann eine erheblich höhere Belastung verursacht als die anderen Wellen. Dann ist es von großem Vorteil, wenn ein Energieabsorber zur Dämpfung von Überlastereignissen vorgesehen ist. Das Überlastereignis ist hier dann eine entsprechend große Welle.

Figur 3 zeigt einen schematischen Schnitt nach Figur 2 in einem Ruhezustand 40. Eingezeichnet ist schematisch auch die Sitzeinrichtung 21 als Beladungseinheit 100. Die Beladungseinheit 100 weist eine Aufnahmeeinheit 101 bzw. eine Sitzfläche 21a auf, auf der sich ein Objekt 103 wie z. B. eine Person 105 wie beispielsweise ein Soldat in einem Truppentransporter oder auf einem Schnellboot oder dergleichen setzen kann.

Im Inneren des Absorberzylinders 5 sind im Schnitt der Absorberkolben 7 und die damit verbundene Kolbenstange 8 der Kolbeneinrichtung 6 erkennbar. Der Absorberkolben 7 teilt die im Inneren des Absorberzylinders 5 vorhandene Absorberkammer 9 in eine erste Kammer 10 und eine zweite Kammer 11. Die zweite Kammer 11 wird nach außen durch den Abschlussdeckel 39 begrenzt und ist hier luftdicht abgeschlossen. Die erste Kammer 10 wird zum Ende hin durch eine Führungsbuchse 45 gelagert und mit einer Dichtung 46 abgedichtet.

Im Ruhezustand ist die erste Kammer 10 wenigstens teilweise und insbesondere vollständig mit (wenigstens einem) Absorberfluid 12 gefüllt. Bei Eintreten eines Überlastereignisses 65 wird die Kolbenstange 8 aus dem Absorberzylinder 5 herausgezogen, sodass das in der ersten Kammer 10 vorhandene Absorberfluid 12 durch das Absorberventil 13 mit dem Absorberkanal 14 in dem Absorberkolben 7 durchtritt und in die zweite Kammer 11 übertritt. Die zweite Kammer 11 kann im Ruhezustand schon zu einem gewissen Teil mit dem Absorberfluid 12 gefüllt sein. Es kann aber auch sein, dass die zweite Kammer 11 im Ruhezustand nur wenig oder gar nicht mit Absorberfluid 12 gefüllt ist, sondern nur mit Luft oder einem anderen kompressiblen Gas oder Medium. Denkbar ist es auch, dass die zweite Kammer 11 mit einem inkompressiblen Medium gefüllt ist, welches bei einem Überlastereignis 65 über ein hier nicht sichtbares Überlastventil irreversibel nach außen abgegeben wird.

Klar erkennbar ist, dass die Kolbenstange 8 einen relativ zu Durchmesser des Absorberzylinders gesehen (sehr) großen Durchmesser aufweist, sodass für die erste Kammer 10 nur ein relativ schmaler Ringspalt um die Kolbenstange herum verbleibt. Dadurch wird beim Ausfahren des Absorberkolbens 7 nur ein relativ geringes Volumen des Absorberfluids 12 aus der ersten Kammer 10 verdrängt. Deshalb sind die Strömungsgeschwindigkeiten des Absorberfluids 12 in dem Absorberkanal 14 auch bei durch Explosionen hervorgerufenen Überlastfällen 65 gering, sodass die Länge des Absorberkolbens 7 ausreicht, um durch das Magnetfeld der elektrischen Spule 16 als Felderzeugungseinrichtung 16 die Strömung des Absorberfluids wie gewünscht zu beeinflussen.

Als Absorberfluid 12 wird insbesondere ein magnetorheologisches Fluid eingesetzt, welches durch das Magnetfeld der elektrischen Spule 16 beeinflussbar ist. Die Spule weist quer zu der Symmetrieachse 30 gewickelte Windungen auf. Ein Dauermagnet 16a kann vorgesehen sein, der ein grundlegendes Magnetfeld erzeugt, welches durch die Spule 16 moduliert wird. Durch einen Dauermagneten 16a wird dann immer eine Mindestdämpfung eingestellt, die durch ein aktiv gesteuertes Magnetfeld der Spule 16 vergrößert oder verringert werden kann.

Bei der Überleitung des Strömungsfluids bzw. Absorberfluids 12 von der ersten Kammer 10 in die zweite Kammer 11 wird das Absorberfluid 12 durch die sich von außen radial schräg nach innen erstreckenden radialen Strömungsöffnungen 44 nach innen hin umgeleitet. Das bedeutet, dass der Strömungskanal bzw. der Absorberkanal 14 radial weiter innen angeordnet ist als die erste Kammer 10. Dadurch kann das Innere des Absorberkolbens 7 effektiv zur Erzeugung des nötigen Magnetfeldes und für den hier schraffierten Absorberkanal 14 verwendet werden.

Die Kolbenstange 8 ist hier erheblich dicker ausgeführt, als es für die Stabilität nötig wäre. Deshalb kann in der Kolbenstange 8 ein Hohlraum 22 vorgesehen sein, der hier als Sackloch ausgeführt ist. Das Sackloch 22 erstreckt sich von dem dem Kolben gegenüberliegenden Ende 26 aus in die Kolbenstange 8 hinein. Der Hohlraum 22 kann sich bis kurz vor den Absorberkolben 7 hin erstrecken, sodass sich die Länge des Hohlraums 22 über dreiviertel oder mehr der Länge der Kolbenstange 8 bis hin zum Absorberkolben 7 erstreckt. Der Hohlraum 22 kann entsprechend genutzt werden. Hier sind im Inneren des Hohlraums 22 die Steuereinrichtung 48 und ein Energiespeicher 47 angeordnet. Die Steuereinrichtung 48 ist mit der elektrischen Spule 16 verbunden, um diese zu steuern. Des Weiteren ist die Steuereinrichtung 48 mit einer Sensoreinrichtung 61 verbunden, um die Belastungen der als Sitzeinrichtung 21 ausgeführten Beladungseinheit 100 aufzunehmen und zu verarbeiten.

Durch den Energiespeicher 47 wird sichergestellt, dass auch bei einem Stromausfall an Bord des Transportmittels jederzeit bzw. wenigstens für einen definierten Zeitraum nach Stromausfall die Baugruppe 1 eine genügende Energiemenge zur Steuerung des Energieabsorbers 2 bereithält. Der Energiespeicher kann ein Kondensator oder ein Akku sein. Möglich ist es auch, dass kein Hohlraum und/oder kein Energiespeicher vorgesehen sind.

Der Absorberkolben 7 trennt hier nicht nur die erste Kammer 10 von der zweiten Kammer 11, sondern bildet auch ein Strömungsventil 13, welches durch die Steuereinrichtung 48 steuerbar ist.

Die Sensoreinrichtung 61 kann in bzw. an der Sitzfläche 21a untergebracht sein. Oberhalb der Sensoreinrichtung 61 kann ein Polster 21b angeordnet sein. Die Sensoreinrichtung 61 an der Sitzfläche 21a erfasst in vorteilhafter Weise eine Belastung bzw. einen Belastungswert der transportierten Person 105 oder eines transportierten Gegenstandes 104. Dabei wird praktischer Weise direkt die Belastung des Objektes 103 bzw. der Belastungswert gemessen. Eine abfedernde Wirkung des Polsters 21b wird mitberücksichtigt und muss nicht separat ermittelt werden.

Das gilt in reduziertem aber immer noch vorteilhaften Maße auch, wenn die Sensoreinrichtung 61 zwischen der Halterung 59 der Sitzeinrichtung 21 und der Halterung 58 an dem Transportmittel angeordnet ist. Auch in diesem Fall wird ein vernünftiges Maß für die Belastung auf die transportierte Person 105 erfasst.

Die Sensoreinrichtung 61 wird hier auch eingesetzt, um ein Maß für ein Gewicht des transportierten Objektes 103 bzw. der transportierten Person 105 zu ermitteln und insbesondre zu erfassen. Setzt sich eine Person 105 auf die Sitzeinrichtung 21, wird die Sensoreinrichtung 61 statisch belastet. Mit den Messwerten kann ein Maß für ein Gewicht der Person 105 abgeleitet werden. Damit wird es möglich, einen individuellen Grenzwert für eine Belastung für eine transportierte Person 105 bzw. ein transportiertes Objekt 103 einzustellen.

In einfachen Fällen kann eine Maximalbelastung bzw. ein Grenzwert für eine Beladungseinheit 100 proportional zu dem Gewicht der zu transportierenden Person eingestellt werden. Typischerweise weist eine schwerere Person mit ähnlichem physischen Zustand stabilere Knochen auf. Von einem ähnlichen oder vergleichbaren physischen Zustand kann bei militärisch geschultem Einsatzpersonal grundsätzlich ausgegangen werden. Deshalb kann auch davon ausgegangen werden, dass eine schwerere Person eine stabilere Knochenstruktur besitzt und auch eine größere Belastung ohne Schäden aushalten kann. Um eine entsprechende Reserve des Absorberhubs vorzuhalten, ist es deshalb vorteilhaft, bei einem Überlastereignis 65 wie einer Minenexplosion eine schwerere Person höheren Belastungen auszusetzen als eine leichtere Person.

Das kann hier über eine Gewichtserfassung der transportierten Personen individuell erfolgen. Ein separater Sensor ist dazu nicht erforderlich. Es kann die Sensoreinrichtung 61 verwendet werden, die insbesondere als Wiegezelle oder Dehnungsmessstreifen oder dergleichen ausgebildet ist. Möglich ist es auch, dass verschiedene Sensoreinrichtungen 61 oder verschiedene Sensoren einer Sensoreinrichtung 61 eingesetzt werden, um ein Maß für ein Gewicht der transportierten Person 105 zu ermitteln.

Für eine typische Person von zum Beispiel 75 kg Gewicht kann ein bestimmter Grenzwert der Belastung vordefiniert werden. Prozentuale Abweichungen für schwerere oder leichtere Personen können eingestellt werden.

Eine Erfassung für ein Maß eines Gewichts einer zu transportierenden Person oder eines zu transportierenden Objektes wird vorzugsweise erfasst, wenn sich die betreffende Person 105 auf die Sitzfläche der Sitzeinrichtung 21 setzt. Möglich ist es, dass beim Aktivieren oder Starten der Baugruppe 1 ein Maß für ein Gewicht erfasst wird. Möglich ist es aber auch, dass ein zeitlicher Mittelwert bei dem Start oder nach dem Start bzw. der Aktivierung der Baugruppe 1 ermittelt wird und für die Berechnung zugrunde gelegt wird. Ein zeitlicher Mittelwert erhöht die Genauigkeit, insbesondere, wenn es sich um einen statischen Mittelwert handelt, während das Transportmittel sich noch nicht fortbewegt. Aber auch bei einem sich bewegenden Transportmittel kann ein zeitlicher Mittelwert für ein Gewicht einer zu transportierenden Person abgeleitet werden und ein ausreichend genaues Ergebnis liefern.

Weiterhin ist in Fig. 3 noch eine Identifikationseinheit 109 an der Person 103 oder auch an dem gestrichelt dargestellten alternativ zu transportierenden Gegenstand 104 zu erkennen. In der Identifikationseinheit 109 ist vorzugsweise ein Speicher 110 enthalten, der Angaben über den Typ 111 und die Eigenschaften der Person 103 und deren individuellen Grenzwert enthält. Beispielsweise kann in dem Speicher 110 eine Angabe für eine Vergrößerung des individuellen Grenzwertes von 10 % enthalten sein. Dann ist es möglich und bevorzugt, dass ein gewichtsabhängiger Grenzwert für die transportierte Person 105 ermittelt wird und anschließend dieser unter Berücksichtigung der individuellen Anpassung um 10 % erhöht wird. In entsprechender Weise ist es auch möglich, den Grenzwert zu verringern. Möglich ist es aber auch, dass im Speicher 110 ein fixer Grenzwert abgelegt ist, der unabhängig von dem Gewicht der zu transportierenden Person 105 eingestellt wird.

Möglich ist es auch, dass in dem Speicher 110 der Identifikationseinheit 109 weitere Angaben über den Typ 111 wie zum Beispiel das Geschlecht, das Alter oder einen körperlichen Zustand enthalten sind. Derartige Angaben können ebenfalls für eine Bestimmung eines individuellen Grenzwerts erfasst und berücksichtigt werden.

Der Inhalt des Speichers 110 der Identifikationseinheit 109 kann drahtgebunden und/oder drahtlos zu der Baugruppe 1 übermittelt werden. Die Übertragung kann über unterschiedliche Verfahren erfolgen. Beispielsweise kann eine Übertragung mittels RFID erfolgen. Möglich ist es, dass eine Übertragung erfolgt, wenn die zu transportierende Person einen entsprechenden Schalter an der Baugruppe 1 berührt oder betätigt, sodass die Zuordnung gesichert ist.

Figuren 4 und 5 zeigen einen schematischen Quer- und Längsschnitt eines Transportmittels 50 wie eines Truppentransporters, an dem erfindungsgemäße Baugruppen 1 zum Schutz der Insassen bei Explosionen vorgesehen sind. Das Transportmittel 50 weist eine Karosserie 51 auf, an der Minenschutzsitze 60 als Baugruppen 1 befestigt sind. Das Fahrzeug 50 ist über Räder mit hier Reifen 52 fahrbar, kann aber auch teilweise oder vollständig über Ketten verfügen. Bei einem Überlastereignis 65, wie beispielsweise einer Explosion wird das Fahrzeug 50 in die Luft geschleudert, wobei eine gedämpfte Bewegung der hier als Sitzeinrichtung 21 ausgeführten Beladungseinheit 100 der Baugruppen 1 erfolgt, um die darauf sitzenden Personen vor bleibenden Schäden zu bewahren.

Figur 5 zeigt einen schematischen Längsschnitt durch ein Transportmittel 50 wie einen Truppentransporter, der über eine Karosserie 51 und mehrere Räder 52 oder auch einen Kettenantrieb verfügt. Ein optionaler Kettenantrieb anstelle oder zusätzlich zu Rädern 52 ist mit einer Kette 52a schematisch gestrichelt eingezeichnet. Im Inneren sind mehrere Sitzeinrichtungen 21 angeordnet, auf der eine Anzahl von Personen 105-107 transportiert werden kann.

Stark schematisch dargestellt ist eine explodierende Mine 90 im hinteren Bereich des Truppentransporters 50. Dadurch wird der hintere Bereich des Truppentransporters 50 angehoben. Ein Drehpunkt 53 befindet sich beispielsweise am vordersten Rad 52. Durch die Abstände 55, 56 und 57 von dem vorderen Drehpunkt 53 ergeben sich unterschiedliche Beschleunigungen und somit unterschiedliche Kräfte auf die Personen 105, 106 und 107. Die Belastung (Belastungswert) der Person 105 ist aufgrund des erheblich geringeren Abstandes 55 zu dem Drehpunkt 53 erheblich geringer als die Belastung der Person 107 in einem mehrfach größeren Abstand 57 zum Drehpunkt. Die Belastung der Person 106 im Abstand 56 ist dabei aufgrund des geringeren Abstands 56 im Vergleich zum Abstand 57 kleiner.

Die transportierte Person 106 ist hier kleiner und leichter als die anderen Personen 105 und 107. Das wirkt sich mindernd auf die auf die Person 106 einwirkende Kraft auf. Gleichzeitig ist zu berücksichtigen, dass eine kleinere Person 106 aber meist nur eine geringere Belastbarkeit aufweist, sodass die maximale Belastung der Person 106 typischerweise geringer ist als die einer größeren und schwereren Person 107. Gleichzeitig sinkt bei gleicher einwirkender Beschleunigung aber auch die Belastung mit abnehmendem Gewicht.

Durch die individuelle Erfassung von jeweils einem Maß für das Gewicht der Personen 105 bis 107 kann eine individuelle Anpassung der Dämpfungen an den Baugruppen 1 der einzelnen Sitzeinrichtungen 21 erreicht werden.

Dadurch wird für jede Person 105 bis 107 jeweils zuverlässig dafür gesorgt, dass der jeweils zulässige individuelle Grenzwert 68 für die Belastung nicht überschritten wird. Die Dämpfung des Energieabsorbers 2 wird zu jedem Zeitpunkt über die Steuereinrichtung 48 so eingestellt, dass auch bei einem Überlastereignis 65 die Belastung bzw. der Belastungswert nicht über die jeweilige Lastgrenze 68 ansteigt.

Es werden in periodischen Abständen Messwerte über die jeweiligen Belastungen erfasst und anhand der jeweiligen Messwerte wird unter Berücksichtigung der jeweiligen Lastgrenzen 68 die Stromstärke in dem Energieabsorber 2 so eingestellt, dass die jeweils zulässige Maximalbelastung 68 nicht überschritten wird. Dabei erfolgt vorzugsweise nach jeder Messung unmittelbar eine Anpassung der Stromstärke, um die jeweilige Dämpfung anzupassen. Möglich ist es auch, dass erst eine Anzahl von Messwerten aufgenommen wird, um ein genaueres Messsignal zu erhalten und dass anschließend die Stromstärke periodisch angepasst wird. Beispielsweise kann jede 0,1 oder jede 0,5 Millisekunde gemessen werden, während alle 1, 2 oder 5 oder 10 Millisekunden die Stromstärke eingestellt wird.

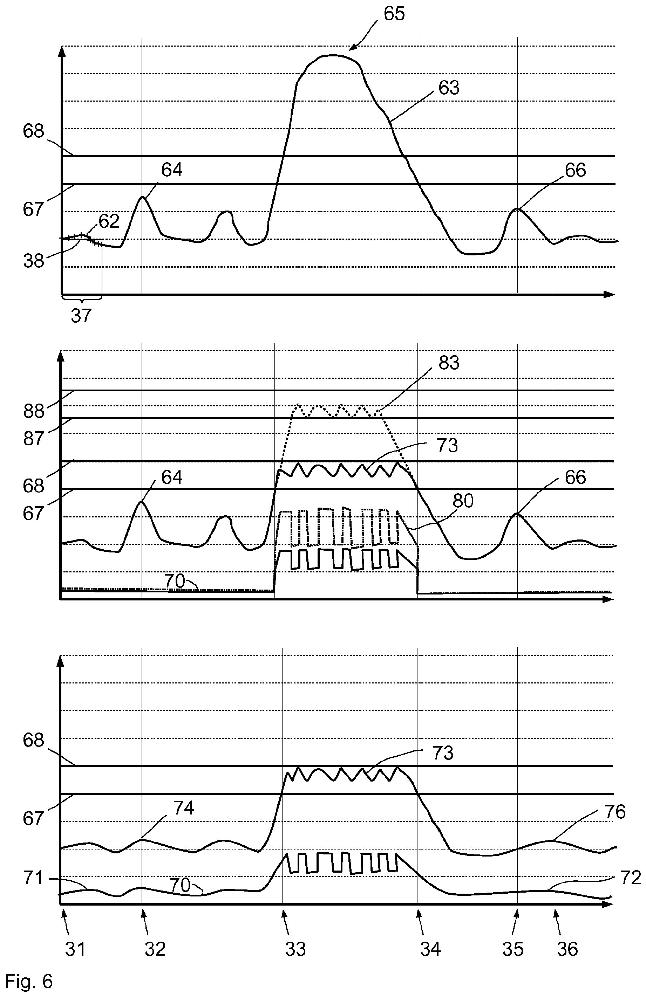

Figur 6 zeigt über dem Zeitverlauf drei mögliche Verläufe des zeitlichen Verlaufs der Belastung bei einem Überlastereignis 65 wie der Explosion der Mine 90 aus Fig. 5.

Dabei zeigt das oberste Diagramm den zeitlichen Verlauf der Belastung inklusive einem Überlastereignis 65. Dieser Verlauf würde sich ergeben, wenn keinerlei Dämpfung vorhanden wäre. Zu Beginn bzw. beim Start der Baugruppe können ab dem Zeitpunkt 31 für eine Zeitspanne 37 Messwerte 62 mit der Sensoreinrichtung 61 aufgezeichnet werden und zur Mittelwertbildung verwendet werden, um ein Maß für ein Gewicht einer transportierten Person 105 zu ermitteln. Mit dem aus den Messwerten abgeleiteten Mittelwert 38 wird ein Grenzwert 68 für die Belastung der zu transportierenden Person 105 eingestellt.

Das mittlere Diagramm zeigt den zeitlichen Verlauf mit einer Überlastdämpfung. Wenn die Messwerte 62 eine Überlastereignisgrenze 67 überschreiten, wird durch die Steuereinrichtung 48 ein Überlastereignis erkannt. Es kann dementsprechend reagiert werden. Alternativ wird ein Überlastereignis erkannt, wenn der Scherbolzen 42 abgeschert wird. Jedenfalls wird (spätestens) nach Erkennung eines Überlastereignisses der Energieabsorber 2 aktiviert, auch wenn keinerlei Komfortfunktion in die Baugruppe 1 integriert ist. Das bedeutet, dass Stöße unterhalb der Überlastereignisgrenze 67 ungedämpft an die Sitzeinrichtung 21 weitergegeben werden. Das trifft im mittleren Diagramm auf die Stöße 64 oder 66 zu, die ungedämpft weitergegeben werden.

Das mittlere Diagramm von Figur 6 zeigt zwei verschiedene Belastungsverläufe 73 und 83 für unterschiedlich schwere Personen, wobei die Person mit dem Belastungsverlauf 83 ein größeres individuelles Gewicht aufbringt als die Person mit dem Belastungsverlauf 73. Durch die unterschiedlichen Gewichte der jeweiligen Personen ergeben sich unterschiedliche Lastgrenzen 67 und 87. Für die leichtere Person ergeben sich die Überlastereignisgrenze 67 und eine Maximalbelastung 68, während sich für die schwerere Person eine deutlich größere Überlastereignisgrenze 87 und eine deutlich höhere Lastgrenze 88 ergeben.

In dem mittleren Diagramm aus Figur 6 werden Stöße unterhalb der jeweiligen Überlastereignisgrenze 67 bzw. 87 ungedämpft weitergegeben, während ab dem Überschreiten der jeweiligen Überlastereignisgrenze 67 bzw. 87 ein entsprechender Stromverlauf 70 (durchgezogen) bzw. 80 (punktiert) eingestellt wird, um jeweils die tatsächliche Belastung bzw. der tatsächliche Belastungswert unterhalb der jeweiligen Lastgrenze 68 bzw. 88 zu halten. Dabei kann es zu den gezeigten Regelschwankungen kommen, die hier aber nur zur Verdeutlichung mit den dargestellten Regelschwankungen dargestellt sind. Je nach Regelgeschwindigkeit und Regelfeinheit kann sich auch eine vollkommen glatte und stetige Kurve ergeben.

Jedenfalls wird in periodischen Abständen die jeweils auftretende Belastung für die transportierte Person 105 (106 ... 107) anhand der tatsächlichen Belastung mit den Messwerten 62 ermittelt. In Abhängigkeit von der Höhe der Messwerte 62 bzw. der entsprechenden Belastung wird eine entsprechende Stromstärke eingestellt, die für die entsprechende Dämpfung an dem Energieabsorber 2 sorgt. Im Endergebnis können sich Belastungsverläufe 73 oder 83 ergeben. Dabei können sich unterschiedliche oder gleiche Stromstärkenverläufe 70, 80 ergeben. Typischerweise wird sich für unterschiedliche Personen jeweils ein unterschiedlicher Verlauf der Stromstärke 70, 80 ergeben.

Im untersten Diagramm von Figur 6 ist ein Belastungsverlauf 73 für die Person 105 aus dem mittleren Diagramm von Figur 6 wiedergegeben, wobei hier zusätzlich noch eine Komfortdämpfung 71 aktiviert wurde.

Ein Überlastereignis 65 tritt wiederum erst zum Zeitpunkt 33 auf, wenn die Überlastereignisgrenze 67 überschritten wurde. Dann erfolgt eine Dämpfung an dem Energieabsorber 2 im Überlastmodus, wobei entsprechende Stromstärken 70 eingestellt werden, damit der tatsächliche Belastungsverlauf 73 unterhalb der Belastungsgrenze 68 verbleibt.

Im dritten und untersten Diagramm von Fig. 6 kann beispielsweise ein Anteil von 20 % des Gesamthubes des Energieabsorbers 2 für die Komfortfunktion zur Verfügung gestellt werden, mit welcher einzelne Stöße 64 und 66 effektiv gedämpft werden können. Dabei kann nicht nur die Höhe von einzelnen Schlägen 64 und 66 unterhalb der Überlastgrenze 67 deutlich reduziert werden, sondern es können für die zu transportierenden Personen auch angenehmere Schwingungsfrequenzen erzeugt werden, die den Körper nicht so stark belasten. Das kann dazu führen, dass ein ursprünglich zum Zeitpunkt 35 auftretender Stoß 66 sich erst zum Zeitpunkt 36 mit einer deutlich geringeren Amplitude 76 bemerkbar macht. Dementsprechend findet sich bei der Komfortdämpfung auch in dem Bereich des Belastungsverlaufs unterhalb der Überlastereignisgrenze 67 ein Stromverlauf, der sich von 0 deutlich unterscheidet.

In allen Ausgestaltungen ist es möglich, dass mit zunehmender Annäherung an das Ende des vorgesehenen Bereiches für die Komfortdämpfung 71 die Komfortdämpfung härter eingestellt wird.

Es ist in allen Ausgestaltungen der Erfindung auch möglich, dass mit zunehmender Annäherung und/oder kurz vor dem Ende des Hubes (z. B. Resthub <5% oder <10%) des Energieabsorbers die Dämpfung noch härter eingestellt wird. Das ist möglich, auch wenn die individuelle Belastungsgrenze (etwas, z. B. <10%) überschritten werden sollte, um insbesondere ein Durchschlagen zu verhindern. Bei einem Durchschlag könnte die auftretende Belastung noch deutlich höher werden, weshalb eine moderate Überschreitung der individuellen Belastungsgrenze geringere schädliche Auswirkungen haben kann oder dauerhaft schädliche Auswirkungen auch vollständig vermeiden kann. Eine solche Erhöhung kann auch individuell realisiert werden.

In allen Ausgestaltungen ist auch bevorzugt, dass die sich im Betrieb ergebenden Belastungsverläufe und die gemessenen Messwerte wenigstens teilweise gespeichert werden. Dann kann eine spätere Auswertung und/oder eine Verbesserung der Steuerung anhand der ausgewerteten Daten erfolgen.

Es ist auch möglich, dass beispielsweise die Knochenstruktur einer zu transportierenden Person als Parameter in dem Speicher 110 der Identifikationseinheit 109 als Information hinterlegt ist und bei der Ermittlung einer individuellen Lastgrenze 68 berücksichtigt wird.

**Bezugszeichenliste:**

| | | | |
|---|---|---|---|
| 1 | Baugruppe | 52 | Reifen |
| 2 | Energieabsorber Befestigungseinrichtung | 52a | Kette |
| | | 53 | Drehpunkt |
| 4 | Halteeinrichtung | 55-57 | Abstand |
| 5 | Absorberzylinder | 58 | Halterung Fahrzeug |
| 6 | Kolbeneinrichtung | 59 | Halterung Sitz |
| 7 | Absorberkolben | 60 | Minenschutzsitz |
| 8 | Kolbenstange | 61 | Sensoreinrichtung |
| 9 | Absorberkammer | 62 | Messwerte |
| 10 | erste Kammer | 63 | Belastungsverlauf |
| 11 | zweite Kammer | 64 | Stoß |
| 12 | Absorberfluid | 65 | Überlastereignis |
| 13 | Absorberventil | 66 | Stoß |
| 14 | Absorberkanal | 67 | Überlastereignisgrenze |
| 16 | elektrische Spule | 68 | Maximalbelastung, Lastgrenze, Grenzwert |
| 16a | Dauermagnet | | |
| 21 | Sitzeinrichtung | 70 | Stromverlauf |
| 21a | Sitzfläche | 71 | Komfortdämpfung |
| 21b | Polster | 73 | Belastungsverlauf |
| 22 | Hohlraum | 74, 76 | Amplitude |
| 23 | Rückstelleinrichtung | 80 | Stromverlauf |
| 26 | Ende | 83 | Belastungsverlauf |
| 30 | Symmetrieachse | 87 | Überlastereignisgrenze |
| 31-36 | Zeitpunkt | 88 | Lastgrenze |
| 37 | Zeitspanne | 90 | Mine |
| 38 | Mittelwert | 100 | Beladungseinheit |
| 39 | Abschlussdeckel | 101 | Aufnahmeeinheit |
| 40 | Ruhezustand | 102 | Trägereinrichtung |
| 42 | Schereinrichtung | 103 | Objekt |
| 43 | Federeinrichtung | 104 | Gegenstand |
| 44 | Strömungsöffnung | 105 | Person |
| 45 | Führungsbuchse | 106 | Person |
| 46 | Dichtung | 107 | Person |
| 47 | Energiespeicher | 109 | Identifikationseinheit |
| 48 | Steuerungseinheit | 110 | Speicher |
| 50 | Transportmittel | 111 | Typ |
| 51 | Karosserie | | |

## Patentansprüche

1. Verfahren zum Absorbieren von Energie bei einem Überlastereignis mit einem Energieabsorber (2), um Belastungen auf ein auf einer Beladungseinheit (100) transportiertes Objekt (103) zu reduzieren,
wobei der Energieabsorber (2) geeignet ist, wenigstens bei einem einmaligen Überlastereignis mit einem derart hohen Energieeintrag, bei dem ohne Energieabsorber ein Schaden an dem Objekt möglich oder überwiegend wahrscheinlich wäre, Energie zu absorbieren, um durch die Energieabsorption des Energieabsorbers (2) bei dem Überlastereignis eine resultierende Belastung auf das Objekt zu reduzieren,
wobei mit einer Sensoreinrichtung (61) periodisch Messwerte (62) über den aktuellen Zustand der Beladungseinheit (100) erfasst werden,
wobei eine Steuereinrichtung (48) aus den erfassten Messwerten (62) ein Überlastereignis (65) erkennt,
**dadurch gekennzeichnet,**
**dass** ein Maß für ein Gewicht des zu transportierenden Objektes (103) ermittelt wird,
und **dass** aus dem Maß für das Gewicht ein Grenzwert (68) für eine Belastung des zu transportierenden Objektes (103) ermittelt wird,
und **dass** nach der Erkennung des Überlastereignisses (65) eine Dämpfung des Energieabsorbers (2) so gesteuert wird, dass die Belastung des zu transportierenden Objektes (103) unterhalb des Grenzwertes (68) verbleibt,
wobei wenigstens nach der Erkennung des Überlastereignisses (65) mit den periodisch erfassten Messwerten (62) periodisch die Dämpfung des Energieabsorbers (2) angepasst wird,
wobei die Überlastereignisgrenze (67) in Abhängigkeit von dem Grenzwert (68) festgelegt wird.

2. Verfahren nach Anspruch 1, wobei die Steuereinrichtung aus den Messwerten (62) periodisch charakteristische Kennwerte für eine Belastung der Beladungseinheit (100) ableitet.

3. Verfahren nach einem der vorhergehenden Ansprüche, wobei an der Beladungseinheit (100) eine Schereinrichtung (42) vorgesehen ist, die abgeschert wird, wenn die auf die Beladungseinheit (100) einwirkende Belastung eine Überlastereignisgrenze (67) überschreitet, wobei die Steuereinrichtung (48) ein Überlastereignis (65) erkennt, wenn ein Abscheren der Schereinrichtung (42) detektiert wird.

4. Verfahren nach einem der vorhergehenden Ansprüche, wobei die Steuereinrichtung (48) ein Überlastereignis (65) erkennt, wenn ein charakteristischer Kennwert eine Überlastereignisgrenze (67) überschreitet.

5. Verfahren nach einem der vorhergehenden Ansprüche, wobei aus der Belastung der Beladungseinheit (100) im Ruhezustand das Maß für ein Gewicht des zu transportierenden Objektes (103) ermittelt wird.

6. Verfahren nach einem der vorhergehenden Ansprüche, wobei aus einem zeitlichen Mittelwert (38) der Belastung der Beladungseinheit (100) das Maß für ein Gewicht des zu transportierenden Objektes (103) ermittelt wird.

7. Verfahren nach dem vorhergehenden Anspruch, wobei die Ermittlung der Belastung der Beladungseinheit (100) direkt nach der Aktivierung durchgeführt wird.

8. Verfahren nach einem der vorhergehenden Ansprüche, wobei eine Ermittlung eines Typs des zu transportierenden Objektes (103) durchgeführt wird und wobei insbesondere eine Identifikationseinheit (109) des zu transportierenden Objektes (103) erkannt wird und wobei vorzugsweise ein Speicher (110) der Identifikationseinheit (109) des zu transportierenden Objektes (103) ausgelesen wird.

9. Verfahren nach einem der vorhergehenden Ansprüche, wobei für einen Anteil eines Hubes des Energieabsorbers (2) eine Komfortdämpfung (71) durchgeführt wird.

10. Verfahren nach einem der vorhergehenden Ansprüche, wobei eine Überlastereignisgrenze (67) und/oder eine Maximalbelastung (68) des zu transportierenden Objektes (103) veränderbar ist und wobei insbesondere eine Voreinstellung für die Maximalbelastung (68) in der Identifikationseinheit (109) gespeichert ist und wobei vorzugsweise die Maximalbelastung (68) abhängig von einem Geschlecht und/oder Alter einer zu transportierenden Person ist.

11. Baugruppe (1) mit einer Beladungseinheit (100) zum Transport von Objekten (103) und einem Energieabsorber (2) zum Absorbieren von Energie wenigstens bei einem Überlastereignis, um Belastungen auf ein auf einer Beladungseinheit (100) transportiertes Objekt (103) zu reduzieren,
wobei der Energieabsorber (2) geeignet und eingerichtet ist, bei einem einmaligen Überlastereignis (65) mit einem derart hohen Energieeintrag, bei dem ohne Energieabsorber (2) ein Schaden an dem Objekt (103) möglich oder überwiegend wahrscheinlich wäre, Energie zu absorbieren, um durch die Energieabsorption des Energieabsorbers (2) bei dem Überlastereignis (65) eine resultierende Belastung auf das Objekt zu reduzieren,
wobei eine Steuereinrichtung (48) und wenigstens eine Sensoreinrichtung (61) zur Erfassung von Messwerten (62) über den aktuellen Zustand der Beladungseinheit (100) und wenigstens der Energieabsorber (2) vorgesehen sind, wobei der Energieabsorber (2) mit den Messwerten (62) durch die Steuereinrichtung (48) steuerbar ist,
wobei die Steuereinrichtung (48) dazu eingerichtet und ausgebildet ist, aus den erfassten Messwerten (62) ein Überlastereignis (65) zu erkennen, **dadurch gekennzeichnet, dass** die Steuereinrichtung (48) dazu eingerichtet und ausgebildet ist, ein Maß für ein Gewicht des zu transportierenden Objektes (103) zu ermitteln und aus dem Maß für das Gewicht einen Grenzwert für eine Belastung (68) des zu transportierenden Objektes (103) zu ermitteln,
und dass die Steuereinrichtung (48) dazu eingerichtet und ausgebildet ist, nach der Erkennung des Überlastereignisses (65) eine Dämpfung des Energieabsorbers (2) so gesteuert wird, dass die Belastung des zu transportierenden Objektes (103) unterhalb des Grenzwertes (68) verbleibt,
und dass die Steuereinrichtung (48) dazu eingerichtet und ausgebildet ist wenigstens nach der Erkennung des Überlastereignisses (65) mit den periodisch erfassten Messwerten (62), periodisch die Dämpfung des Energieabsorbers (2) anzupassen und die Überlastereignisgrenze (67) in Abhängigkeit von dem Grenzwert (68) festzulegen.

12. Baugruppe (1) nach dem vorhergehenden Anspruch, wobei die Sensoreinrichtung (61) an der Baugruppe (1) befestigt ist und wobei die Sensoreinrichtung (61) insbesondere an einem gedämpften Teil (4) der Baugruppe (1) befestigt ist und/oder wobei die Sensoreinrichtung (61) wenigstens einen Sensor wie z. B. eine Wiegezelle, eine Kraftmessdose und/oder einen Dehnungsmessstreifen umfasst
und/oder wobei der Energieabsorber (2) über wenigstens ein Absorberventil (13) verfügt, dessen Dämpfung über eine Stärke eines angelegten Magnetfeldes gesteuert wird
und/oder wobei an der Beladungseinheit (100) eine Schereinrichtung (42) vorgesehen ist, die abscherbar ist, wenn die auf die Beladungseinheit (100) einwirkende Belastung ein vorbestimmtes Maß (67) überschreitet
und/oder wobei die Beladungseinheit (100) als Sitzeinrichtung (21) an einem Transportmittel wie einem Fahrzeug oder Boot ausgebildet ist, wobei die Sitzeinrichtung (21) eine als Sitz ausgebildete Aufnahmeeinheit (101) und eine als Sitzrahmen ausgebildete Trägereinrichtung (102) umfasst, wobei der Energieabsorber (2) zwischen dem Sitz und dem Sitzrahmen angebracht ist.

## Claims

1. A method for absorbing energy during an overload event with an energy absorber (2) in order to reduce loads acting on an entity (103) being transported on a load unit (100),
wherein the energy absorber (2) is adapted to absorb energy at least during a one-off overload event involving such a high energy input that damage to the entity would be possible or highly likely without an energy absorber, in order to reduce, through the energy absorption of the energy absorber (2), a load acting on the entity as the result of the overload event, wherein measurement values (62) regarding the current state of the load unit (100) are periodically captured by a sensor element (61),
wherein an overload event (65) is detected by a control element (48) based on the captured measurement values (62),
**characterized in that**
a measure for a weight of the entity (103) to be transported is determined,
and **in that** a limit value (68) for a load acting on the entity (103) to be transported is determined based on the measure for the weight,
and **in that**, following the detection of the overload event (65), a damping of the energy absorber (2) is controlled so that the load acting on the entity (103) to be transported remains below the limit value (68),
wherein at least following the detection of the overload event (65), the damping of the energy absorber (2) is periodically adjusted based on the periodically captured measurement values (62),
wherein the overload-event limit (67) is defined as a function of the limit value (68).

2. A method according to claim 1, wherein the control element periodically derives characteristic parameters for a load acting on the load unit (100) from the measurement values (62).

3. A method according to one of the preceding claims, wherein a shear element (42) is provided on the load unit (100), which shear element (42) shears when the load acting on the load unit (100) exceeds an overload-event limit (67), wherein the control element (48) detects an overload event (65) when a shearing of the shear element (42) is detected.

4. A method according to one of the preceding claims, wherein the control element (48) detects an overload event (65) when a characteristic parameter exceeds an overload-event limit (67).

5. A method according to one of the preceding claims, wherein the measure of a weight of the entity (103) to be transported is determined from the load acting on the load unit (100) in a state of rest.

6. A method according to one of the preceding claims, wherein the measure of a weight of the entity (103) to be transported is determined from a time-averaged value (38) of the load acting on the load unit (100).

7. A method according to the preceding claim, wherein the determination of the load acting on the load unit (100) is carried out immediately after activation.

8. A method according to one of the preceding claims, wherein a determination of a type of the entity (103) to be transported is carried out, and wherein in particular an identification unit (109) of the entity (103) to be transported is detected, and wherein preferably a memory (110) of the identification unit (109) of the entity (103) to be transported is read out.

9. A method according to one of the preceding claims, wherein a comfort damping (71) is carried out for a portion of a stroke of the energy absorber (2).

10. A method according to one of the preceding claims, wherein an overload-event limit (67) and/or a maximum load (68) of the entity (103) to be transported is modifiable, and wherein in particular a default setting for the maximum load (68) is stored in the identification unit (109), and wherein the maximum load (68) preferably depends on a gender and/or age of a person to be transported.

11. A device (1) with a load unit (100) for transporting entities (103) and an energy absorber (2) for absorbing energy at least during an overload event in order to reduce loads acting on an entity (103) being transported on a load unit (100),
wherein the energy absorber (2) is adapted and configured to absorb energy during a one-off overload event (65) involving such a high energy input that damage to the entity (103) would be possible or highly likely without an energy absorber (2), in order to reduce, through the energy absorption of the energy absorber (2), a load acting on the entity as a result of the overload event (65),
wherein a control element (48) and at least one sensor element (61) for detecting measurement values (62) relating to the current state of the load unit (100) and at least of the energy absorber (2) are provided, wherein the energy absorber (2) can be controlled by the control element (48) based on the measurement values (62),
wherein the control element (48) is configured and designed to detect an overload event (65) from the detected measurement values (62),
**characterized in that**
the control element (48) is configured and designed to determine a measure for a weight of the entity (103) to be transported and to use the measure for the weight to determine a limit value for a load (68) acting on the entity (103) to be transported,
and **in that** the control element (48) is configured and designed in such a manner that, following the detection of the overload event (65), a damping of the energy absorber (2) is controlled in such a manner that the load acting on the entity (103) to be transported remains below the limit value (68),
and **in that** the control element (48) is configured and designed to periodically adjust the damping of the energy absorber (2) based on the periodically captured measurement values (62) at least following the detection of the overload event (65) and to define the overload-event limit (67) as a function of the limit value (68).

12. A device (1) according to the preceding claim, wherein the sensor element (61) is attached on the device (1), and wherein the sensor element (61) is in particular attached on a damped part (4) of the device (1),
and/or wherein the sensor element (61) includes at least one sensor such as, e.g., a load cell, a force transducer and/or a strain gauge,
and/or wherein the energy absorber (2) has at least one absorber valve (13) whose damping is controlled by a strength of an applied magnetic field,
and/or wherein a shear element (42) is provided on the load unit (100), which can shear when the load acting on the load unit (100) exceeds a predetermined measure (67),
and/or wherein the load unit (100) is designed as a seat element (21) on a transport means such as a vehicle or boat, wherein the seat element (21) includes a receiving unit (101) in the form of a seat and a support element (102) in the form of a seat frame, wherein the energy absorber (2) is arranged between the seat and the seat frame.

## Revendications

1. Procédé d'absorption d'énergie pour un évènement de surcharge pour un évènement de surcharge avec un absorbeur d'énergie (2) pour réduire des charges sur un objet transporté (103) sur une unité de chargement (100),
sachant que l'absorbeur d'énergie (2) est adapté pour absorber de l'énergie au moins lors d'un évènement de surcharge unique avec un apport d'énergie élevé tel qu'un dommage sur l'objet serait probablement possible ou prédominant sans absorbeur d'énergie pour réduire une charge résultante sur l'objet par l'absorption d'énergie de l'absorbeur d'énergie (2) lors de l'évènement de surcharge,
sachant qu'avec un système de détection (61) des valeurs de mesure (62) sont périodiquement saisies concernant l'état actuel de l'unité de chargement (100),
sachant qu'un système de commande (48) identifie un évènement de surcharge (65) à partir des valeurs de mesure saisies (62),
**caractérisé en ce qu'**
une mesure pour un poids de l'objet à transporter (103) est déterminée,
et **en ce qu'**une valeur limite (68) pour une charge de l'objet à transporter (103) est déterminée à partir de la mesure pour le poids,
et **en ce qu'**un amortissement de l'absorbeur d'énergie (2) est commandé après l'identification de l'évènement de surcharge (65) de telle manière que la charge de l'objet à transporter (103) reste en dessous de la valeur limite (68),
sachant que l'amortissement de l'absorbeur d'énergie (2) est adapté au moins après l'identification de l'évènement de surcharge (65) aux valeurs de mesure (62) périodiquement saisies,
sachant que la limite d'évènement de surcharge (67) est fixée en fonction de la valeur limite (68).

2. Procédé selon la revendication 1, sachant que le système de commande déduit périodiquement à partir des valeurs de mesure (62) des valeurs périodiquement caractéristiques pour une charge de l'unité de chargement (100).

3. Procédé selon l'une quelconque des revendications précédentes, sachant qu'un système de cisaillement (42) est prévu sur l'unité de chargement (100), qui est cisaillé lorsque la charge agissant sur l'unité de chargement (100) dépasse une limite d'évènement de surcharge (67), sachant que le système de commande (48) identifie un évènement de surcharge (65), lorsqu'un cisaillement du système de cisaillement (42) est détecté.

4. Procédé selon l'une quelconque des revendications précédentes, sachant que le système de commande (48) identifie un évènement de surcharge (65), lorsqu'une valeur caractéristique dépasse une limite d'évènement de surcharge (67).

5. Procédé selon l'une quelconque des revendications précédentes, sachant que la mesure pour un poids de l'objet à transporter (103) est déterminée à partir de la charge de l'unité de chargement (100) à l'état de repos.

6. Procédé selon l'une quelconque des revendications précédentes, sachant que la mesure pour un poids de l'objet à transporter (103) est déterminée à partir d'une moyenne dans le temps (38) de la charge de l'unité de chargement (100).

7. Procédé selon la revendication précédente, sachant que la détermination de la charge de l'unité de chargement (100) est directement effectuée après l'activation.

8. Procédé selon l'une quelconque des revendications précédentes, sachant qu'une détermination d'un type de l'objet à transporter (103) est effectuée et sachant en particulier qu'une unité d'identification (109) de l'objet à transporter (103) est identifiée et sachant de préférence qu'une mémoire (110) de l'unité d'identification (109) de l'objet à transporter (103) est lue.

9. Procédé selon l'une quelconque des revendications précédentes, sachant que pour une partie d'une course de l'absorbeur d'énergie (2) un amortissement de confort (71) est pratiqué.

10. Procédé selon l'une quelconque des revendications précédentes, sachant qu'une limite d'évènement de surcharge (67) et/ou une charge maximale (68) de l'objet à transporter (103) peut être modifiée,
et sachant en particulier qu'un préréglage pour la charge maximale (68) est mémorisé dans l'unité d'identification (109) et sachant de préférence que la charge maximale (68) est fonction d'un sexe et/ou de l'âge d'une personne à transporter.

11. Module (1) avec une unité de chargement (100) pour le transport d'objets (103) et un absorbeur d'énergie (2) pour absorber de l'énergie au moins lors d'un évènement de surcharge pour réduire des charges sur un objet (103) transporté sur une unité de chargement (100),
sachant que l'absorbeur d'énergie (2) est adapté et agencé pour absorber de l'énergie lors d'un évènement de surcharge (65) unique avec un apport d'énergie élevé tel qu'un dommage sur l'objet (103) serait probablement possible ou prédominant sans absorbeur d'énergie (2) pour réduire une charge résultante sur l'objet par l'absorption d'énergie de l'absorbeur d'énergie (2) lors de l'évènement de surcharge (65),
sachant qu'un système de commande (48) et au moins un système de détection (61) pour la saisie de valeurs de mesure (62) concernant l'état actuel de l'unité de chargement (100) et au moins l'absorbeur d'énergie (2) sont prévus, sachant que l'absorbeur d'énergie (2) peut être commandé avec les valeurs de mesure (62) par le système de commande (48),
sachant que le système de commande (48) est agencé et constitué pour identifier un évènement de surcharge (65) à partir des valeurs de mesure (62) saisies, **caractérisé en ce que**
le système de commande (48) est agencé et constitué pour déterminer une mesure pour un poids de l'objet à transporter (103) et déterminer une valeur limite pour une charge (68) de l'objet à transporter (103) à partir de la mesure pour le poids,
et **en ce que** le système de commande (48) est agencé et constitué pour qu'un amortissement de l'absorbeur d'énergie ((2) soit commandé après l'identification de l'évènement de surcharge (65) de telle manière que la charge de l'objet à transporter (103) reste en dessous de la valeur limite (68),
et **en ce que** le système de commande (48) est agencé et constitué pour adapter périodiquement l'amortissement de l'absorbeur d'énergie (2) au moins après l'identification de l'évènement de surcharge (65) aux valeurs de mesure (62) périodiquement saisies et fixer la limite d'évènement de surcharge (67) en fonction de la valeur limite (68).

12. Module (1) selon la revendication précédente, sachant que le système de détection (61) est fixé au module (1) et
sachant que le système de détection (61) est fixé en particulier à une partie (4) amortie du module (1),
et/ou sachant que le système de détection (61) comprend au moins un capteur, comme par ex. : une cellule de pesée, une dose de mesure de force et/ou un extensomètre,
et/ou sachant que l'absorbeur d'énergie (2) dispose au moins d'une soupape d'absorbeur (13) dont l'amortissement est commandé par le biais d'une intensité d'un champ magnétique appliqué,
et/ou sachant qu'un système de cisaillement (42) est prévu sur l'unité de chargement (100), qui peut être cisaillé, lorsque la charge agissant sur l'unité de chargement (100) dépasse une mesure (67) prédéterminée,
et/ou sachant que l'unité de chargement (100) est constituée sous la forme d'un système de siège (21) sur un moyen de transport comme un véhicule ou un bateau, sachant que le système de siège (21) comprend une unité de réception (101) constituée sous la forme d'un siège et un système porteur (102) constitué sous la forme d'un cadre de siège, sachant que l'absorbeur d'énergie (2) est monté entre le siège et le cadre de siège.
